# EUROPEAN PATENT APPLICATION

(11) **EP 3 110 114 A1**
(43) Date of publication of application: **28.12.2016**
(21) Application number: 16175876.8
(22) Date of filing: 23.06.2016
(51) Int. Cl.: H04M 1/06

(54) **PHONE AND METHOD FOR CONTROLLING THE PHONE**

(30) Priority: 26.06.2015 CN 201510362674
(71) Applicant: Sercomm Corporation, Taipei 115 (TW)
(72) Inventor: XIAO, David, Suzhou industrial Park, Jiiangsu (CN); WANG, Qi, Suzhou industrial Park, Jiiangsu (CN)
(74) Representative: 2K Patentanwälte Blasberg Kewitz & Reichel

(57) **Abstract**

A phone and a method for controlling the phone are provided. The phone includes a handset and a handset base. The handset is suitable for disposing on the handset base, so as to move a hang-up component on the handset base. The phone control method includes: transmitting a wireless signal from a transmitter inside the handset base through a wireless transmitting path inside the handset base; selectively generating a first detection signal or a second detection signal by a receiver inside the handset base, based on whether or not the wireless signal is received through the wireless transmitting path; and selectively switching a system state of the phone based on the first detection signal or the second detection signal received from the receiver. Therefore, the invention can maintain a simple hang-up operation and extend the lifetime of the hang-up component.

## Description

### BACKGROUND OF THE INVENTION

### 1. Field of the Invention

The present invention generally relates to technology of phone control, in particular, to a phone and a method for controlling the phone.

### 2. Description of Related Art

Although the mobile communication apparatus is more and more popular, a landline phone or a fixed phone (hereinafter also called phone) having the handset and the handset base is still rather popularly used. In general, the control for a hang-up button of phone can be categorized into mechanical control and sensing control. The mechanical control conducts the contact switch inside the phone by pushing the hang-up button, so to switch the system state of phone, such as hanging up the phone or starting to dial. The sensing control achieves the foregoing function by sensing a distance between the handset and the handset base.

However, both the conventional mechanical control and sensing control have the disadvantages. For example, the contact switch in the conventional mechanical control is easily aging, resulting in the issue of poor detection. The sensing control has the issues of complicate operation and lack of practicality, such as a case that the user cannot use the finger to press the phone button to hang up the phone.

### SUMMARY OF THE INVENTION

Accordingly, the invention provides a phone and a method for controlling the phone, capable of maintaining a simple hang-up operation and improving the lifetime of the hang-up component.

The invention in an embodiment provides a method for controlling a phone. The phone comprises a handset and a handset base. The handset is adapted for disposing on the handset base to move with a hang-up component on the handset base. The method comprises: transmitting a wireless signal from a transmitter inside the handset base through a wireless transmitting path inside the handset base; selectively generating a first detection signaldetection signal or a second detection signaldetection signal by a receiver inside the handset base, based on whether or not the wireless signal is received through the wireless transmitting path; and selectively switching a system state of the phone based on the first detection signaldetection signal or the second detection signaldetection signal received from the receiver.

The invention in another embodiment provides a phone. The phone comprises a handset and a handset base. The handset base comprises a hang-up component. A wireless transmitting path is inside of the handset base. A movement track of the hang-up component allows the hang-up component to selectively block the wireless transmitting path. The handset is adapted for disposing on the handset base to move with the hang-up component on the handset base. The handset further comprises a transmitter, a receiver, and a controller. The transmitter is configured to transmit a wireless signal to the wireless transmitting path. The receiver is configured to selectively generate a first detection signaldetection signal or a second detection signaldetection signal, based on whether or not the wireless signal is received through the wireless transmitting path. The controller is electrically connected to the transmitter and the receiver and configured to selectively switch a system state of the phone based on the first detection signaldetection signal or the second detection signaldetection signal received from the receiver.

As to the foregoing descriptions, the invention can use the hang-up component of the handset base to selectively block or not block the wireless signal transmitted inside the handset base and then to control the system state of the phone. As a result, a simple hang-up operation can be maintained and the lifetime of the hang-up component can be extended.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a drawing, schematically illustrating an appearance of a phone, according to an embodiment of the invention.
FIG. 2 is a drawing, schematically illustrating an interior of a handset base, according to an embodiment of the invention.
FIG. 3 and FG. 4 are drawings, schematically illustrating the block diagrams of a phone, according to an embodiment of the invention.
FIG. 5 is a drawing, schematically illustrating a flow chart of signal generating method, according to an embodiment of the invention.
FIG. 6 is a drawing, schematically illustrating a flow chart of phone control method, according to an embodiment of the invention.
FIG. 7 is a drawing, schematically illustrating a block diagram of the controller, according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

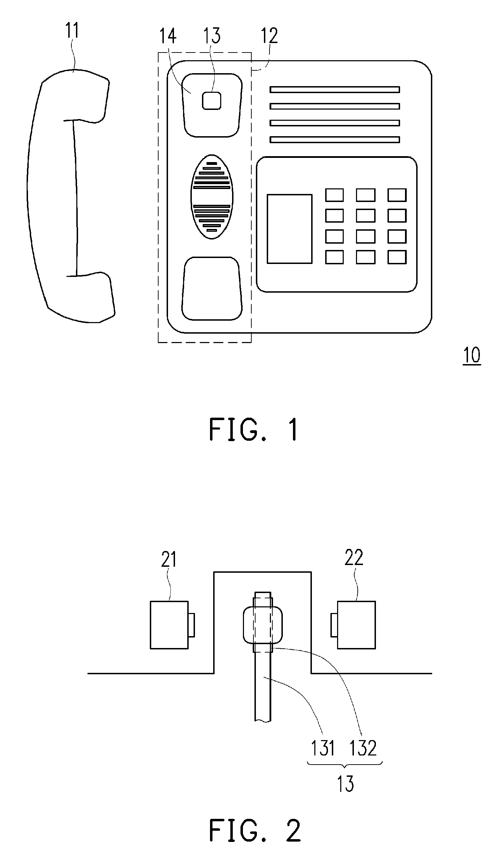

FIG. 1 is a drawing, schematically illustrating an appearance of a phone, according to an embodiment of the invention. Referring to FIG. 1, a phone 10 includes a handset 11 and a handset base 12. In an embodiment, the handset base 12 is referring to the region marked by dashed line in FIG. 1 for disposing the handset 11. However, in another embodiment, the handset base 12 can also refer to the whole phone base without including the handset 11. For example, the phone base can have multiple physical buttons or virtual buttons thereon, used to input number or instruction. In an embodiment, the handset 11 is a wireless handset, which can be connected to the handset base 12 by wireless connection manner. However, in another embodiment, the wire connection manner can also be taken for connecting between the handset 11 and the handset base 12.

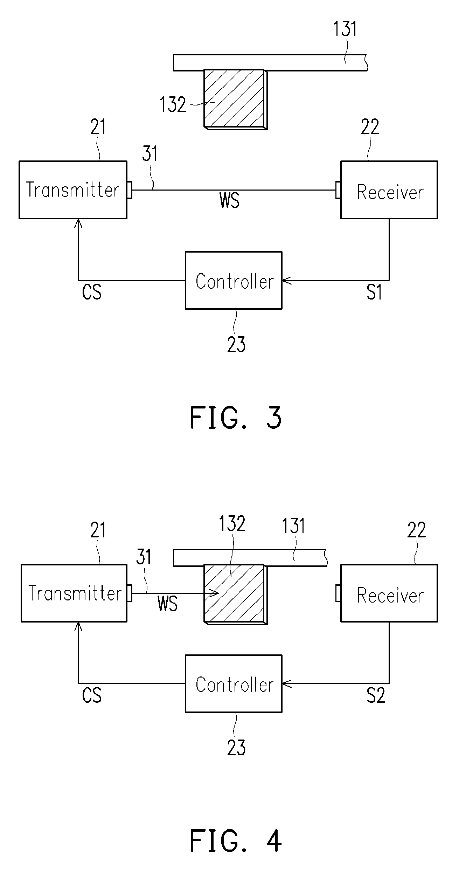

FIG. 2 is a drawing, schematically illustrating an interior of a handset base, according to an embodiment of the invention. FIG. 3 and FG. 4 are drawings, schematically illustrating the block diagrams of a phone, according to an embodiment of the invention. Referring to FIG. 1 to FIG. 4, a hang-up component 13, a transmitter 21, a receiver 22 and a controller 23 are implemented inside the handset base 12. The handset 11 is adapted to be disposed on the handset base 12, so as to move with the hang-up component 13 on the handset base 12. For example, the handset 11 can be disposed on the handset base 12 to push the hang-up component 13. The controller 23 can be implemented by a single or multiple electronic components. The phone 10 can have an elastic component that allows the hang-up component 13 to move down a bit when it's pressed and moves the hang-up component 13 back when the hang-up component 13 is not pressed.

The transmitter 21 is configured to transmit the wireless signal WS through the wireless transmitting path 31 inside the handset base 12. In an embodiment, the transmitter 21 can be an infrared transmitter, and the wireless signal WS is infrared light. The receiver 22 is configured to receive the wireless signal WS transmitted through the wireless transmitting path 31. In an embodiment, the receiver 21 can be an infrared receiver. The receiver 22 selectively generates and outputs detection signal in different types, based on whether or not the wireless signal WS is received from the transmitter 21.

The transmitter 21 and the receiver 22 are disposed oppositely. The transmitter 21, the receiver 22 and the controller 23 can be disposed on one or more circuit boards inside the handset base 12 (or any location of the phone base). The controller 23 is electrically connected to the transmitter 21 and the receiver 22. The controller 23 is configured to generate and output a control signal CS to the transmitter 21. The transmitter 21 accordingly transmits the wireless signal WS, based on the control signal CS. In an embodiment, the control signal CS is a pulse width modulation (PWM) signal, and the wireless signal WS is also a PWM signal corresponding to the control signal CS. As an example, the light intensity of the infrared light used to transmit the wireless signal WS would be increased or decreased in accordance with the signal waveform of the control signal CS. In addition, the controller 23 receives the detection signal output from the receiver 22 and then switches the system state of the phone 10 according to the detection signal as received.

The hang-up component 13 includes a pushing part 131 and a blocking part 132. The pushing part 131 protrudes a surface 14 of the handset base 12 and moves with the blocking part 132, as shown in FIG. 1 and FIG. 2. Since the pushing part 131 can protrude from the surface 14 of the handset base 12, the handset 11 can be disposed on the handset base 12 and thereby pushing the pushing part 131 toward the interior of the handset base 12. In addition, the pushing part 131 can also be pushed toward the interior of the handset base 12 due to press by any external force.

If the pushing part 131 is pushed toward the interior of the handset base 12, the blocking part 132 as moved therewith would block the wireless transmitting path 31 inside the handset base 12, as shown in FIG. 4. Contrarily, if the pushing part 131 is not pushed toward the interior of the handset base 12, the blocking part 132 does not block the wireless transmitting path 31 inside the handset base 12, as shown in FIG. 3.

In other words, the hang-up component 13 can be used to replace the conventional mechanical hang-up button. By the movement track of the hang-up component 13, it can allow the hang-up component 13 to selectively block or not block the wireless transmitting path 31 inside the handset base 12, so as to simulate the hang-up operation. As an example, if the hang-up component 13 is pressed down (i.e., pushed toward interior of the handset base 12), it can be regarded as that the handset 11 is disposed on the handset base 12. If the hang-up component 13 is not pressed down, it can be regarded as the handset 11 is picked-up from the handset base 12.

With respect to the conventional mechanical hang-up button which uses the result of whether or not an electric conduction exists between the hang-up button and the detection circuit inside the phone base to judge whether or not the handset is picked up by the user, the hang-up component 13 blocks the wireless transmitting path 31 inside the handset base 12 by using the blocking part 132 when the pushing part 131 of the hang-up component 13 is pressed down. Therefore, with respect to the conventional mechanical hang-up button, since the hang-up component 13 is not affected by factors, such as the corrosion due to metal oxidization, the lifetime of the hang-up component 13 would be longer.

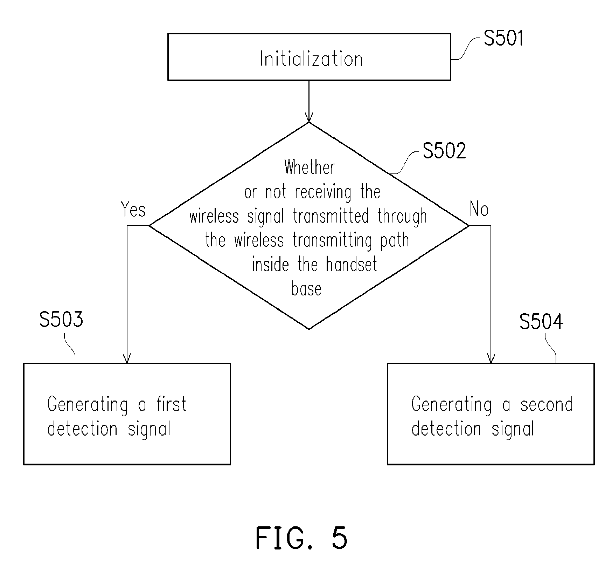

FIG. 5 is a drawing, schematically illustrating a flow chart of signal generating method, according to an embodiment of the invention. The signal generating method is suitable for use in receiver 22. Referring to FIG. 3 to FIG. 5, in step S501, the receiver 22 is initialized, such as being provided with power. In step S502, the receiver 22 detects whether or not the wireless signal WS transmitted through the wireless transmitting path 31 has been received.

If the wireless signal WS is received by the receiver 22, in step S503, the receiver 22 generates and outputs a detection signal S1 (hereinafter also called a first detection signal). As an example, if the blocking part 132 does not block the wireless signal WS transmitted through the wireless transmitting path 31, the receiver 22 would receive the wireless signal WS, and then generate and output the detection signal S1, as shown in FIG. 3. If the wireless signal WS is not received by the receiver 22, in step S504, the receiver 22 would generate and output a detection signal S2 (hereinafter also called a second detection signal). As an example, if the blocking part 132 does block the wireless signal WS transmitted through the wireless transmitting path 31, the receiver 22 cannot receive the wireless signal WS, and then the receiver 22 generates and outputs the detection signal S2, as shown in FIG. 4.

In the embodiment, the first detection signal is a PWM signal having a waveform of multiple pulses, while the second detection signal is signal having a constant voltage level. In another embodiment, the first detection signal and the second detection signal can also be other types of signals, as long as the controller 23 can distinguish the signals. Controller 23 can determine whether or not to switch the system state of the phone 10, based on the detection signal being the first detection signal or the second detection signal. The first detection signal corresponds to the situation that the handset 11 is picked up. The second detection signal corresponds to the situation that the handset 11 is placed on the handset base 12 or the user has pressed the pushing part 131 by hand.

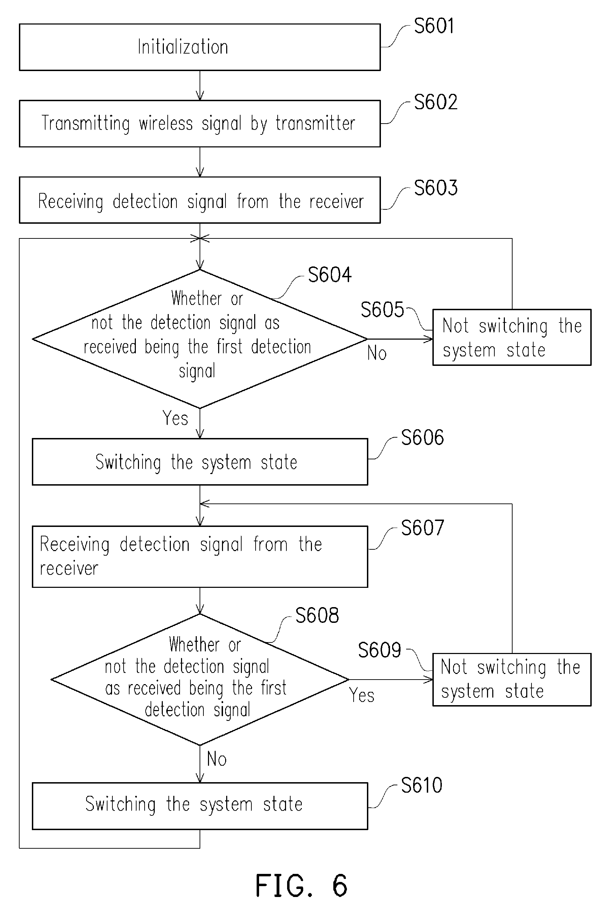

FIG. 6 is a drawing, schematically illustrating a flow chart of the method for controlling the phone, according to an embodiment of the invention. The method shown in FIG. 6 can be adapted to the controller 23. Referring to FIG. 3, FIG. 4 and FIG. 6, in step S601, the controller 23 is initialized, such as being provided with power. In step S602, the controller 23 outputs the control signal CS to the transmitter 21 for instructing the transmitter 21 to transmit the wireless signal WS. In step S603, the controller 23 receives the detection signal from the receiver 22.

Remarkably, in the embodiment, it is assumed that the handset 11 would be disposed on the handset base 12 as preset. Thereby, in step S603, the controller 23, in the beginning action as preset, receives the detection signal S2 from the receiver 22.

In step S604, the controller 23 determines whether or not the detection signal as received is the detection signal S1. If the detection signal as received is not the detection signal S1 (e.g., the detection signal received is the detection signal S2 continuously), it indicates that the handset 11 is still disposed on the handset base 12. Therefore, in step S605, the controller 23 does not switch the system state of the phone 10. For example, in step S605, the controller 23 can keep the system state of the phone 10 at an idle state corresponding to that the handset 11 is disposed on the handset base 12. For example, in the idle state, the phone 10 can wait for a phone call, wait for receiving a button input by the user, or wait for the handset 11 being picked up.

If the detection signal as revived is the detection signal S1 (e.g., the detection signal as revived is switched form the detection signal S2 to the detection signal S1), it indicates that the handset 11 has been picked up from the handset base 12. Therefore, in step S606, the controller 23 switch the system state of the phone 10. For example, in step S606, the controller 23 can switch the system state of the phone 10 from the idle state to a communication state capable of communication. For example, in the communication state, the phone 10 can receive phone number input by the user and can set up the phone connection with a communication apparatus owning the phone number, and so on.

In step S607, the controller 23 keeps on receiving the detection signal from the receiver 22. In step S608, the controller 23 keeps on determining whether or not the detection signal received from the receiver 22 is the detection signal S1. If the controller 23 keeps on receiving the detection signal S1 from the receiver 22, it indicates that the handset 11 is continuously picked up by the user (e.g., the user does not close a phone connection of a current call). Thereby, in step S609, the controller 23 does not switch the system state of the phone 10 and keeps the system state of the phone 10 at the state corresponding that the handset 11 has been picked up from the handset base 12, such as the foresaid communication state. After the step S609, the step S607 is repeated.

If the controller 23 determines that the detection signal received from the receiver 22 has been switched from the detection signal S1 to the detection signal S2, it indicates that the user has already disposed the handset 11 on the handset base 12 (e.g., the user closes the phone connection of the current call). Therefore, in step S610, the controller 23 switches the system state of the phone 10. For example, in step S610, the controller 23 can switch the system state of the phone 10 from the communication state to the idle state. After the step 610, the step 604 is repeated.

Remarkably, in another embodiment of FIG. 6, the idle state can be represented as a first state, while the communication state can be represented as a second state. Thereby, for another embodiment of FIG. 6, in step S606, the controller 23 can switch the system state of the phone 10 from the first state to the second state, in correspondence to the situation that the handset 11 is picked up from the handset base 12. After then, the controller 23 can switch the system state of the phone 10 from the second state back to the first state, in correspondence to the situation that handset 11 is disposed on the handset base 12. In addition, the method as shown in FIG. 6 can be singly implemented or implemented with combination of the foregoing other embodiments.

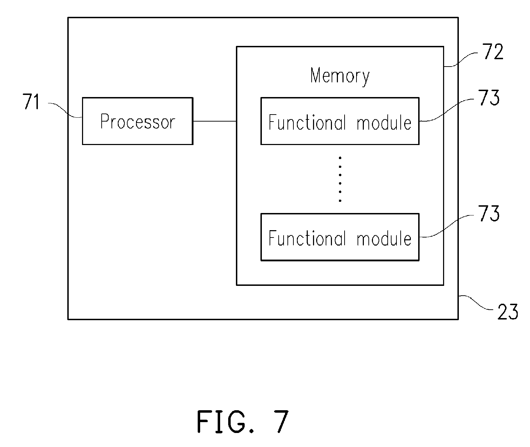

FIG. 7 is a drawing, schematically illustrating a block diagram of the controller, according to an embodiment of the invention. Referring to FIG. 7, in the embodiment, the controller 23 includes a processor 71 and a memory 72. The processor 71 can include a processing chip, a central processing unit (CPU), micro processor, micro controller or embedded controller, which has control capability. The memory 72 can include various kinds of a storage media such as read-only memory (ROM), flash memory, or hard disk. The memory 72 is electrically connected to the processor 71 and stores multiple functional modules 73. The processor 71 can load in the functional modules 73 to execute each step in FIG 6 and various functions as stated in foregoing embodiments. However, in another embodiment, the controller 23 can also include multiple hardware circuits corresponding to the steps shown in FIG. 6, and then execute each step in FIG. 6 and various functions as stated in foregoing embodiments.

As to foregoing descriptions, the invention can control the system state of the phone by the wireless signal transmitted inside the handset base. Particularly, the invention can use the hang-up component, which is moved with a deposition of the handset, to block the wireless signal transmitted inside the handset base and further selectively switch the system state of the phone. Thereby, the invention can maintain a simple hang-up operation and extend the lifetime of the hang-up component. As an example, with respect to the conventional mechanical hang-up button, since the hang-up component in the invention is not affected by the corrosion due to metal oxidization, the lifetime of the hang-up component would be longer. In addition, since the generation and short distance transmission of the PWM signal do not require much power, it is still rather power-saving even if the phone is operated for a long time. In addition, the lifetime for the transmitter may be prolonged by using the PWM signal.

In summary there is provided a phone and a method for controlling the phone are provided. The phone includes a handset and a handset base. The handset is suitable for disposing on the handset base, so as to move a hang-up component on the handset base. The phone control method includes: transmitting a wireless signal from a transmitter inside the handset base through a wireless transmitting path inside the handset base; selectively generating a first detection signal or a second detection signal by a receiver inside the handset base, based on whether or not the wireless signal is received through the wireless transmitting path; and selectively switching a system state of the phone based on the first detection signal or the second detection signal received from the receiver. Therefore, the invention can maintain a simple hang-up operation and extend the lifetime of the hang-up component.

## Claims

1. A method for controlling a phone (10), wherein the phone (10) comprises a handset (11) and a handset base (12), the handset (11) is adapted for disposing on the handset base (12) to move with a hang-up component (13) of the handset base (12), the method comprising:
transmitting (S602) a wireless signal (WS) from a transmitter (21) inside the handset base (12) through a wireless transmitting path (31) inside the handset base (12);
selectively generating (S502, S503, S504) a first detection signal (S1) or a second detection signal (S2) by a receiver (22) inside the handset base (12), based on whether the wireless signal (WS) is received through the wireless transmitting path (31); and
selectively switching (S606, S610) a system state of the phone (10) based on the first detection signal (S1) or the second detection signal (S2) received from the receiver (22).

2. The method as recited in claim 1, wherein a movement track of the hang-up component (13) allows the hang-up component (13) to selectively block or not block the wireless transmitting path (31).

3. The method as recited in claim 1 or 2, wherein a pushing part (131) of the hang-up component (13) protrudes from a surface (14) of the handset base (12) and moves with a blocking part (132) of the hang-up component (13),
wherein the blocking part (132) blocks the wireless transmitting path (31) inside the handset base (12) if the pushing part (131) is pushed toward an interior of the handset base (12).

4. The method as recited in one of the preceding claims, wherein the wireless signal (WS) is a pulse width modulation signal.

5. The method as recited in one of the preceding claims, wherein the transmitter (21) is an infrared transmitter, the receiver (22) is an infrared receiver, and the wireless signal (WS) is infrared light.

6. A phone (10), comprising:
a handset base (12), comprising a hang-up component (13), a wireless transmitting path (31) being inside of the handset base (12), a movement track of the hang-up component (13) allowing the hang-up component (13) to selectively block or not block the wireless transmitting path (31); and
a handset (11), adapted for disposing on the handset base (12) to move with the hang-up component (13) on the handset base (12),
wherein the handset base (12) further comprises:
a transmitter (21), configured to transmit a wireless signal (WS) to the wireless transmitting path (31);
a receiver (22), configured to selectively generate a first detection signal (S1) or a second detection signal (S2) based on whether the wireless signal (WS) is received through the wireless transmitting path (31); and
a controller (23), electrically connected to the transmitter (21) and the receiver (22), configured to selectively switch a system state of the phone (10) based on the first detection signal (S1) or the second detection signal (S2) received from the receiver (22).

7. The phone (10) as recited in claim 6, wherein a pushing part (131) of the hang-up component (13) protrudes from a surface (14) of the handset base (12) and moves with a blocking part (132) of the hang-up component (13),
wherein the blocking part (132) blocks the wireless transmitting path (31) inside the handset base (12) if the pushing part (131) is pushed toward an interior of the handset base (12).

8. The phone (10) as recited in claim 6 or 7, wherein the wireless signal (WS) is a pulse width modulation signal.

9. The phone (10) as recited in one of the claims 6-8, wherein the transmitter (21) is an infrared transmitter, the receiver (22) is an infrared receiver, and the wireless signal (WS) is infrared light.
